Europäisches Patentamt

European Patent Office

Office européen des brevets

(19)

(11) Publication number: **0 173 514 B1**

# EUROPEAN PATENT SPECIFICATION

(12)

(45) Date of publication of patent specification: **20.03.91**  (51) Int. Cl.5: **B60R  13/06**

(21) Application number: **85305788.3**

(22) Date of filing: **14.08.85**

(54) Strip structure intended for clamping on a flange.

(30) Priority: **23.08.84 GB 8421385**
**04.07.85 GB 8516970**

(43) Date of publication of application:
**05.03.86 Bulletin  86/10**

(45) Publication of the grant of the patent:
**20.03.91 Bulletin  91/12**

(84) Designated Contracting States:
**AT BE CH DE FR IT LI LU NL SE**

(56) References cited:
**DE-A- 1 555 806**
**DE-A- 1 555 866**
**DE-A- 3 114 157**
**FR-A- 2 297 366**

(73) Proprietor: **SILENT CHANNEL PRODUCTS LIMITED**
**Dryden House St. John's Street**
**Huntingdon Cambridgeshire PE18 6DD(GB)**

(72) Inventor: **Tuckley, Trevor Royston**
**7 The Furrows**
**St. Ives Cambridgeshire(GB)**
Inventor: **Pike, Harold William Edward**
**Elm Lee School Lane**
**Conington Nr. Elsworth Cambridgeshire(GB)**

(74) Representative: **Jones, Michael Raymond et al**
**HASELTINE LAKE & CO. Hazlitt House 28**
**Southampton Buildings Chancery Lane**
**London WC2A 1AT(GB)**

EP 0 173 514 B1

## Description

This invention relates to a strip structure intended to be clamped securely on a flange or like member.

DE-A-3114157 discloses a channel-shaped structure for clamping to a flange, the structure having several short securing lips which protrude from each side wall of the channel. Each securing lip is associated with a projection on a side wall of the channel with which an inner surface of the securing lip may cooperate.

DE-A-1555806 discloses a structure having a horseshoe-shaped profile which is provided with tooth-like projections on the inner sides of two converging limbs. Each converging limb appears to enclose a projection.

It is well known to provide channel-shaped strip structures intended to be clamped on a flange or like member. When used for clamping over a flange, such strip structures are often referred to as flange finishers.

Such strip structures have a channel defined by a base and two opposing side walls, which constitute a body which may be formed of a suitable rubber material or a suitable plastics material. To give any desired extra rigidity to the body it is conventional for a core to be embedded in the body, which core is usually formed of a metal.

With a view to resisting accidental removal of the strip structure from a flange, strip structures are usually provided on opposing side walls with inwardly directed limbs which act rather like a barb. Thus, when the strip structure is forced onto a flange, the limbs are caused to be deflected laterally and to be moved slightly towards the base of the channel, but, when an attempt is made to remove the strip structure from the flange, the action of the limbs pressing on the flange and their general disposition tends to prevent such removal.

One conventional strip structure in production has four minor limbs projecting inwardly from one side wall of the strip structure and two major limbs projecting inwardly from the opposing side wall; such a typical channel-shaped strip structure has an internal width of approximately 6mm. Various tests were run to find the force required to push the conventional strip structure onto a flange having a thickness of 1.5mm. In three separate runs the forces required, over a sample having a length of 100mm, were 24 Newtons, 30 Newtons and 30 Newtons, and the forces required to remove the same sample strip structure from the same flange were, respectively, 92 Newtons, 100 Newtons and 95 Newtons.

Similarly, when the same conventional strip structure was clamped on and then removed from a flange having an increased thickness of 2.5mm, the forces during the clamping operation, over the 100mm sample length, were 70 Newtons for all three samples, and the forces required for removal of the strip structure from the flange for the three runs were 165 Newtons, 178 Newtons and 170 Newtons.

Thus it can be seen that the ratio of the force required to remove the strip structure from the flange to the force required to clamp the strip structure to the flange was about 3.5:1 in the case of the flange having a thickness of 1.5mm, and about 2.:1 in the case of the flange having a thickness of 2.5mm.

In the tests on the conventional production strip structures, the strip structures were secured to flanges having a thickness of 1.5 or 2.5mm, these being typical thicknesses, although occasionally thinner flanges are found in experience.

Strip structures can be formed from any suitable material, for example polyvinyl chloride, or a so-called nitrile polyvinyl chloride blend. The limbs, which are sometimes formed from a material having a different hardness to that of the rest of the body, are usually tactile to some extent and, when the strip structure is clamped on a flange, the limbs tend to adhere to some extent to the opposing faces of the flange so that, when a force is applied to the strip structure to remove it from the flange, the free end regions of the limbs have a marked tendency to remain in a fixed position relative to the flange, which can compel the remainer of the limbs to reverse or "roll" around the fixed position which can cause the channel to be forced into a wider configuration.

In view of the need to provide strip structures which can be fitted to flanges relatively easily and yet which are strongly resistant to accidental removal, some research has been carried out relating to different facets of the strip structure. This research was also occasioned by a particular motor manufacturer indicating that they wanted a strip structure which, over a 100mm length, required no more than 75 Newtons to force the strip structure onto the flange and which could not be removed with a force of less than 200 Newtons; it became clear that certain modifications would need to be made to existing strip structures in order to satisfy these criteria.

According to the present invention, there is provided a strip structure intended for clamping engagement on a flange or like member, the strip structure having a channel defined by a base and two opposed side walls, each side wall being integrally provided with an elongate limb directed inwardly and towards the base such that the limbs abut at their free end regions;

wherein that face of each limb which faces the corresponding face of the other limb is straight or substantially straight over a portion of the limb in the region of the free end;

wherein the side walls are also each provided with an inward projection which is nearer the base of the channel than is the root of the limb;

wherein each of the limbs is provided on that face which faces the side wall with a recess in which the projection may be accommodated;

Wherein each limb has a length, as measured along the face which faces the corresponding face of the other limb, which exceeds the width of the channel at the point where the root of the limb projects from its respective side wall; and

the arrangement being such that, in use, when the strip structure is being clamped on a flange or like member, the flange causes the limbs to be moved apart, with the projections being accommodated in the corresponding recesses, whereby the clamping may be effected without undue force, but, when an attempt is made to remove the strip structure from the flange, the free end regions of the limbs grip the flange and the limbs are restrained from undue movement towards the open end of the channel by the interaction of the projections and the limbs in the region of the recesses of the latter, the configuration of the limbs and the effect of said interaction being such that considerably more force is required to remove the strip structure from the flange than is required to clamp the strip structure on the flange.

Preferably the limbs are formed, on at least those surface regions which face the opposing limb, from a polished plasticised polyvinyl chloride material.

As with conventional strip structures which serve as flange finishers, the strip structure of the present invention can have, but do not need to have, a sealing element attached to the exterior of the body of the strip structure. Such an arrangement is often employed in the region of the doors of automobile bodies, with the strip structure being secured to a flange and the sealing element forming a suitable seal between the door and the door frame.

The strip structures according to the present invention can have any suitable body, and it is not necessary for the body to have a metal core, although this is nowadays conventional in practice as the core can resist any tendency of the two side walls defining the channel to move apart during an attempt to remove the strip structure from a flange.

In one embodiment of the present invention, the recess in each limb is rather large compared with the magnitude of the projection, and the free end region of the limb increases in thickness in the direction from the free end towards the root, so that a head portion, rather like half an arrowhead, is present in the free end region of the limb. It is that end of the arrowhead portion nearer the root which abuts the projection, when the strip structure is fitted to a flange and an attempt is made to remove the strip structure from the flange.

Preferably each limb has at its free end region an enlarged head of which a proximal part is formed as a rolling key capable, in use, when the strip structure is clamped on a flange, of interacting with the respective projection to resist removal of the strip structure from the flange.

In such an arrangement the projections can each have a camming face so that, with the limbs adhering to the flange, any attempt to cause the flange to be removed tends to cause the limbs to be moved towards the open end of the channel but, when this happens, the camming action of the camming face of the projections urges the limbs even more tightly against the flange, thereby tending to increase the resistance to removal of the strip structure from the flange.

The body and the limbs of such a strip structure could be formed of a rubber material, such as a styrene butadiene rubber, and the body portion of the strip structure could have a hardness of 70 Shore, with the limbs having a hardness of 60 shore. If desired a sponge sealing element formed frcm, for instance, an ethylene/propylene/ diene monomer terpolymer (EPDM) could be secured to the exterior of one side wall. Rather than form the body (including the limbs) from styrene butadiene rubber, the body together with any sealing element could be formed from the ethylene/propylene/ diene monomer terpolymer.

Alternatively, if both the body and any sealing element were formed of rubber, the strip structure could be formed during a single extrusion operation.

In a second, preferred, embodiment of the present invention, the recesses in the limbs are smaller than those in the first embodiment, but again the projections have a camming surface so that, when the strip structure is fitted on a flange, with the long straight edge regions of the limbs abutting opposite sides of the flange, any attempt to remove the strip structure from the flange causes regions of the limbs defining part of the recesses to abut the camming face of the projections, thereby tending to increase the resistance to the removal of the strip structure from the flange.

In practice, when it is expected that flanges having a thickness of 1.5 or 2.5mm are to be fitted with the strip structure, the width of the limbs, other than in the region of the recesses, is preferably such that the limbs and the flange occupy the great majority of the width of the cahnnel. Although the projections certainly assist in encouraging the limbs to grip the flange more firmly, nonetheless even if the projections were very small, the magnitude and configuration of the limbs can be such that the limbs have a good gripping effect on the flange. Often the body, in which the metal core (when present) is embedded, is formed of a polyvinyl chloride, or a nitrile polyvinyl chloride blend, although many other different materails can be used to construct the body, including the limbs.

It has been stated above that the length of the limbs, as measured in the manner indicated above, preferably exceeds the width of the channel at the point of which the roots of the limbs are affixed to the side walls of the channel. Preferably the length of each limb to the width of the channel exceeds the ratio 1.1:1; more preferably the ratio of the length of the limb to the width of the channel exceeds the ratio 1.2:1, good results in particular being obtained when the ratio of the length of the limb to the width of the channel exceeds 1.3:1, or more preferably exceeds 1.4:1, even reaching approximately 1.5:1.

As regards the polished plasticised polyvinyl chloride material, this can exist as a surface region only of the limbs; alternatively, the whole or substantially the whole limb can be formed from this material. It is interesting to observe that the good retention results obtainable with a strip structure in accordance with the present invention, can be enhanced when the polished plasticised polyvinyl chloride surface regions of the limbs are provided. For a better understanding of the present invention and to show how the same may be carried into effect, reference will now be made, by way of example, to the accompanying drawings in which:

Figure 1 is a cross-section through one embodiment of a strip structure in accordance with the present invention;

Figure 2 is a cross-section through a second embodiment of strip structure in accordance with the present invention;

Figure 3 is a cross-section of the strip structure of Figure 2 clamped to a flange; and

Figure 4 is a cross-section through a third embodiment of strip structure in accordance with the present invention.

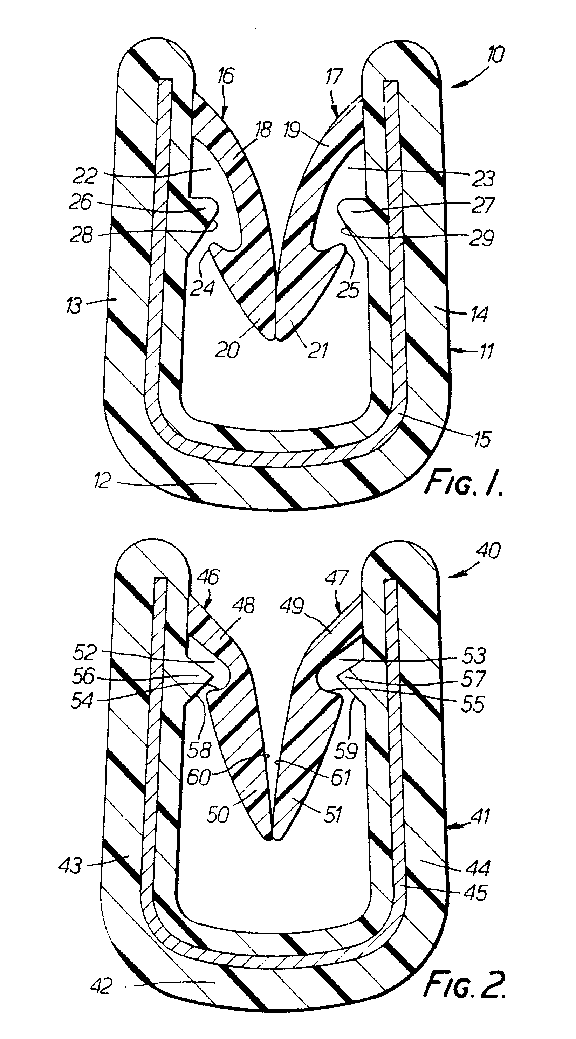

Referring first to Figure 1, the strip structure generally indicated by the reference numeral 10 comprises a body generally indicated by the reference numeral 11 which has a base 12 and two almost parallel side walls 13, 14. Embedded in the body 11 is a metal reinforcing core 15. The body 11 is generally channel-shaped.

Projecting from the side walls 13, 14, inwardly and towards the base 12 are two limbs 16, 17, one from each side wall. The limbs 16, 17 have respective shank portions 18, 19 in those portions of their length nearer the point at which they are attached to the side walls 13, 14. The shank portions 18, 19 lead to respective head portions 20, 21 which abut each other. The shape of the shank portions 18, 19 and the head portions 20, 21 is such as to define recesses 22, 23, the head portions 20, 21 having barb-like portions 24, 25 directed towards the side walls 13, 14, respectively.

Also projecting from the side walls, 13, 14 inwardly into the interior of the channel are two projections 26, 27, one projection from each side wall. The projections 26, 27 have camming faces 28, 29 for the purpose indicated below.

When a flange (not shown) is to be fitted with a strip structure in accordance with Figure 1, the flange is moved into the channel defined by the base 12 and side walls 13, 14 and, as the flange advances, it pushes aside the limbs 16, 17. This is possible because the projections 26, 27, are accommodated within the recesses 22, 23. Prior to the flange entering the channel, the head regions 20, 21 off the limbs 16, 17 abutted each other, and those faces of the shanks 18, 19 of the limbs 16, 17 which face each other were generally arcuate.

Now, with the flange inserted fully into, the channel, the limbs 16 and 17 are forced apart and the head portions 20; 21 of the limbs 16, 17 abut and adhere to the flange. This is because the limbs 16, 17 are generally tactile.

When the flange is fully inserted in the channel, the barb-like portions 24, 25 of the head portions 20, 21 of the limbs 16, 17 are against or almost against the side walls 13, 14 of the strip structure and are near the narrower ends of the projections 26, 27.

As soon as any attempt is made to remove the strip structure 10 from the flange, then, in view of the tendency of the head portions 20, 21 to remain stationary with respect to the flange it can be appreciated that any tendency of the limbs 16, 17 to be moved towards the open end of the channel causes the barb-like portions 24, 25 to abut the camming faces 28, 29 of the projections 26, 27 with the result that any such movement tends to cause the limbs 16, 17 to be urged inwardly and hence even more tightly against the flange, thereby increasing the resistance to removal of the flange.

With regard now to the second embodiment illustrated in Figure 2 of the drawings, the components indicated by the reference numerals 40 to 59 inclusive correspond in general terms and in function to the components of the strip structure shown in Figure 1 and indicated by the reference numerals 10 to 29, respectively. By comparing Figure 2 with Figure 1 it can be seen that the projections 56, 57 are differently shaped from, and smaller than, the projections 26, 27 shown in Figure 1; also, the shanks 48, 49 are shorter than the shanks 18, 19, and the head portions 50, 51 are longer than the head portions 20, 21, with the result that the recesses 52, 53 are generally smaller than the recesses 22, 23.

Another significant difference is that those, faces 60, 61 of the head portions 50, 51 which face each other are straight or substantially straight over the length of the head portions 50, 51.

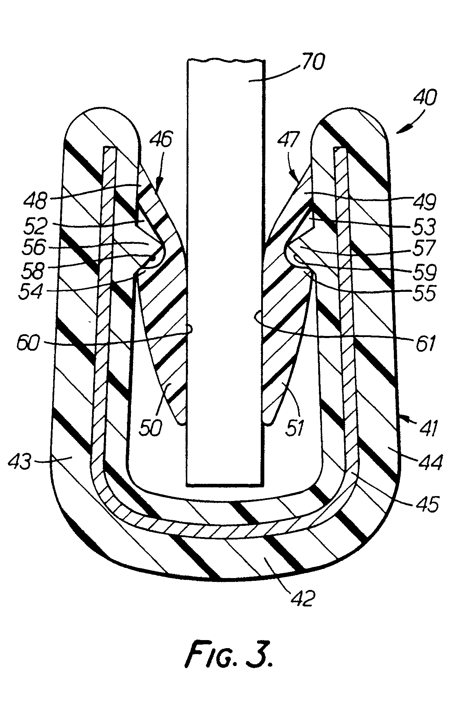

The strip structure 40 shown in Figure 2 can be used in much the same way as the strip structure shown in Figure 1, and the flange can be easily introduced into the channel but its removal therefrom is resisted for reasons similar to those which account for the resistance to the removal of she flange from the strip, structure of Figure 1. However, the longer head portions 50 and 51, plus the straight or almost straight faces 60, 61 give a large area of contact between the head portions 50, 51 and the flange, with a corresponding increase in resistance to removal of the strip structure from the flange. Figure 3 shows a flange 70 fully inserted into the channel, with barb-like portions 54, 55 abutting the projections 56, 57.

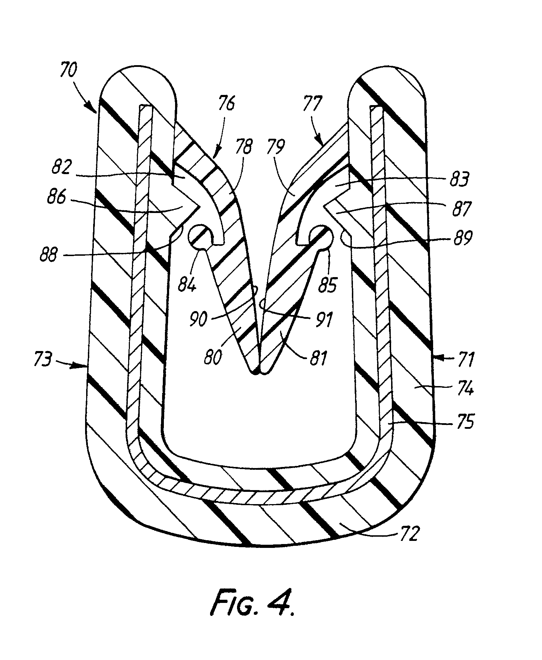

With regard now to the third embodiment illustrated in Figure 4 of the drawings, the components indicated by the reference numerals 70 to 83 and 86 to 91 inclusive correspond in general terms and in function to the components of the strip structure shown in Figure 2 and indicated by the reference numerals 40 to 53 and 56 to 61, respectively.

By comparing Figures 2 and 4, it can be seen that the proximal parts of the head portions 50, 51 and 80, 81 differ in that, in the embodiment shown in Figure 2, the portions ,54, 55 serve as barbs and, in use, abut the projections 56, 57, whereas, in the embodiment shown in Figure 4, the corresponding portions 84, 85 are formed as rolling keys which, when reacting with the camming faces 88, 89 of the projections 86, 87, roll when any attempt is made to remove the strip structure 70 from a flange, which further enhances the removal-resistance effect provided by the barb-like portions 54, 55 of the embodiment shown in Figure 2.

Although the strip structures shown in Figures 1, 2 and 4 can be formed of any suitable material, for example a styrene butadiene rubber, or a polyvinyl chloride, or an acrylo-nitrile polyvinyl chloride blend, the performance of the strip structures can be enhanced, in the sense of increasing the resistance to removal of the strip structures from the flange, by, forming at least the inwardly facing faces of the limbs 16, 17 (or 60, 61 or 90, 91) of a polished, plasticised polyvinyl chloride material, ,or by forming the whole of the limbs 16, 17 or 46, 47 or 76,77 of such material. It is well known how polyvinyl chloride can be treated to make it polished, and in the present case it has been found convenient, when, the limbs 16, 17 or 46, 47 or 76, 77 are formed of a plasticised polyvinyl chloride, to effect extrusion of the limbs at a higher temperature than is normally employed. Here, it has to be appreciated that if too high a temperature is employed the heat can have a detrimental effect on the quality of the polyvinyl chloride. If, though, the temperature exceeds the normally lower, conventional, extrusion temperature the polyvinyl chloride produced can be suitably plasticised and polished, and this is especially so when the polyvinyl chloride is a clear polyvinyl chloride.

The following Examples 1 to 4 illustrate the present invention. In each of the Examples samples of strip structures, each 100mm in length, were fitted over a flange which, in Example 1, had a thickness of 1.5mm and,Examples 2, 3 and 4, a thickness of 2.5mm. In all cases the average width of the channel (excluding the limbs and inward projections) was 6.0mm. In all cases the forces required to fit the 100mm length of strip structure onto the flange and then to remove the strip structure from the flange are expressed in Newtons (N).

## EXAMPLE 1

Using a 100m sample of the strip structure as shown in Figure 2 of the accompanying drawings, provided with nitrile/polyvinyl chloride blend limbs and using a flange 1.5mm in thickness, the sample was fitted five times to the flange and the force required to fit the sample was 9N, 11N, 8N, 9N and 8N; in order to remove the same sample the forces required were 490N, 485N. 485N, 510N and 480N.

It can be seen that. the average ratio of the force required to remove the strip structure from the flange to the force required to clamp the strip structure to the flange was of the order of 54.5:1.

## EXAMPLE 2

The tests carried out in Example 1 were repeated, using the same sample of strip structure but this time clamping the strip structure to a flange having a thickness of 2.5mm.

Six tests were conducted under these circumstances, and the forces required to fit the strip structure to the thicker flange were 31N, 29N, 27N, 35N, 37N and 39N, and the corresponding forces to remove the strip structure were respectively 570N, 515N, 440N, 400N, 782N and 580N. The large jump between the fourth and fifth readings of the forces to remove the strip structure from the flange is believed to be attributable to the fact that between the two readings the flange was cleaned again, to provide a smoother, more polished surface, which contrary to expectations permits the limbs of the strip structure to grip more firmly.

It can be seen that the average of the ratio of the forces required to apply the strip structure to the flange, to the forces required to remove the strip structure from the flange, was of the order of 16.6:1.

## EXAMPLE 3

In this Example and the following Example 4, the strip structure had the base and side walls formed of 70-90 Shore black PVC whereas the limbs were formed of a clear, polished, plasticised polyvinyl chloride compound VT 637 (Norsk Hydro). In Example 3 the strip structure had the configuration shown in Figure 1 , whereas in Example 4 the strip structure had the configuration shown in Figure 2 of the accompanying drawings. In both of Figures 3 and 4 the strip structures were applied to a flange test piece having a thickness of 2.5mm.

In Example 3, there were three test runs with the 100mm length sample which required forces of 20N, 25N and 30N to apply it to the flange but required forces of 550N, 435N and 410N to remove the strip structure from the flange. Thus the ratio of the average of the forces required to remove the strip structure from the flange to the average of the forces required to apply the strip structure to the flange was of the order of 18.6:1.

## EXAMPLE 4

Under the conditions specified for Example 4, as set out in Example 3 above, the 100mm length of sample of Figure 2 configuration was tested, and over three runs a consistent force of 30N was required to apply the strip structure to the flange, whereas the forces required to move the sample over the three runs were 620N, 684N and 635N. Here it can be seen that the ratio of the force required to remove the strip structure from the flange to the force required to apply the strip structure to the flange has risen to about 21.5:1.

Although the limbs of the strip structures employed in Examples 3 and 4 were both formed of the polished plasticised polyvinyl chloride, and although the other test conditions were the same, it is expected that, with the 2.5mm flange, the improved results found in Example 4 were attributable to the relatively long straight edges 60, 61 shown in Figure 2, together with the more robust configuration of the limbs 46, 47 of the strip structure shown in Figure 2 compared with the corresponding limbs 16, 17 of the strip structure shown in Figure 1.

The foregoing Examples illustrate what results can be achieved by using the first and second aspects, or first, second and third aspects, of the present invention in conjunction with each other. Naturally, if less impressive ratios are required for certain applications, this can be achieved by reducing the length of the limbs, by making the opposing faces of the limbs more matt (i.e. less polished), or by making less of the opposing faces of the limb straight.

## Claims

1. A strip structure (10,40,70) intended for clamping engagement on a flange or like member (70), the strip structure having a channel defined by a base (12,42,72) and two opposed side walls (13,14,43,44,73,74), each side wall being integrally provided with an elongate limb (16,17,46,47,76,77) directed inwardly and towards the base such that the limbs abut at their free end regions;

    wherein that face of each limb which faces the corresponding face of the other limb is straight or substantially straight over a portion of the limb in the region of the free end;

    wherein the side walls are also each provided with an inward projection (26,27,56,57,86,87) which is nearer the base of the channel than is the root of the limb;

    wherein each of the limbs is provided on that face which faces the side wall with a recess (22,23,52,53,82,83) in which the projection may be accommodated; wherein each limb has a length, as measured along the face which faces the corresponding face of the other limb, which exceeds the width of the channel at the point where the root of the limb projects from its respective side wall; and

    the arrangement being such that, in use, when the strip structure is being clamped on a flange or like member, the flange causes the limbs to be moved apart, with the projections being accommodated in the corresponding recesses, whereby the clamping may be effected without undue force, but, when an attempt is made to remove the strip structure from the flange, the free end regions of the limbs grip the flange and the limbs are restrained from undue movement towards the open end of the channel by the interaction of the projections and the limbs in the region of the recesses of the latter, the configuration of the limbs and the effect of said interaction being such that considerably more force is required to remove the strip structure from the flange than is required to clamp the strip structure on the flange.

2. A strip structure according to Claim 1, wherein the projections (26,27,56,57,86,87) each having a camming face against which, when in use an attempt is made to remove the strip structure from the flange, an enlarged free end region (20,21,50,51,80,82) of the limb abuts, in a manner such as to urge the free end region of the limb into harder contact with the flange.

3. A strip structure according to Claim 1 or 2 wherein the ratio of the length of each limb, as measured along the face which faces the corresponding face of the other limb, to the width of the channel at the point where the root of each limb projects from its respective side wall exceeds 1,1:1, preferably exceeds 1,2:1, more preferably exceeds 1,3:1, even more preferably exceeds 1,4:1, and most preferably is approximately 1,5:1.

4. A strip structure according to any preceding claim, wherein the limbs are formed, on at least those surface regions (60,61,P0,P1) which face the opposing limb, from a polished plasticised polyvinyl chloride material;

the arrangement being such that, in use, when an attempt is made to remove the strip structure from a flange on which it is clamped, the inwardly directed faces of the limbs grip the flange over a considerable length which, in conjunction with the polished plasticised polyvinyl chloride nature of those faces, causes a firm grip on the flange, whereby considerably more force is required to remove the strip structure from the flange than is required to clamp the strip structure on the flange.

5. A strip structure according to Claim 4, wherein the substantially the whole of each limb is formed of a polished, plasticised polyvinyl chloride material.

6. A strip structure according to any preceding claim, which also includes a sealing element adjacent the exterior of one of the side walls, and/or which also includes a core (15,45,75) embedded within the base and side walls of the strip structure.

7. A strip structure according to any preceding claim, wherein the base and the two side walls are formed of a polyvinyl chloride, a nitrile polyvinyl chloride blend, or a styrene butadiene rubber.

8. A strip structure according to any preceding claim, wherein the base and the two side walls have a Shore hardness of approximately 70 and the limbs have a Shore hardness of approximately 60.

9. A strip structure according to any preceding claim, which, when being fitted to and removed from a flange having a thickness of 2.5mm, has a ratio exceeding 10:1 in respect of the ratio of the force required to remove the strip structure from the flange to the force required to push the strip structure onto the flange.

10. A strip structure according to any preceding claim, wherein each limb has at its free end region an enlarged head of which a proximal part abuting in use the corresponding projection rolling key (84,85) in use, when the strip structure is clamped on a flange, of interacting with the respective projection to resist removal of the strip structure from the flange.

**Revendications**

1. Bande de garniture (10,40,70) destinée à enserrer un rebord ou auto élément analogue (70), la bande de garniture formant une rainure définie par une base (12,42,72) et deux parois latérales opposées (13, 14,43,44,73,74), chaque paroi latérale étant pourvue d'une branche allongée (15, 17,45,47,76,77) qui en fait partie intégrante et qui est dirigée vers l'intérieur en direction de la base de telle sorte que les branches portent l'une contre l'autre dans leur région d'extrémité libre;

dans laquelle la face de chaque branche qui est orientée vers la face correspondante de l'autre branche et rectiligne ou sensiblement rectiligne sur une partie de la branche située dans la région de l'extrémité libre;

dans laquelle les parois latérales sont également pourvues chacune d'une saillie intérieure (26, 27,56,57,86,87) qui se trouve plus près de la base et de la rainure que de la racine de la branche;

dans laquelle chacune des branches est pourvue sur la face qui est orientée vers la paroi latérale d'un évidement (22, 23, 52,53, 82, 83) dans lequel la saillie peut venir se loger;

dans laquelle chaque branche a une longueur qui, mesurée le long de la face qui est orientée vers la face correspondante de l'autre branche, est supérieure à la largeur de la rainure au point où la racine de la branche fait saillie de sa paroi latérale correspondante; et

l'agencement étant tel que, pendant l'utilisation, quand la bande de garniture est engagée sur un rebord ou autre élément analogue pour l'enserrer, le rebord fait s'écarter l'une de l'autre lesdites branches, les saillies étant logées dans les évidements correspondants, grâce à quoi on peut effectuer l'engagement sans force exagérée mais, quand on tente d'enlever la bande de garniture du rebord, les régions d'extrémité libres des branches agrippent le rebord et les branches sont retenues à l'encontre de tout déplacement exagéré en direction de l'extrémité ouverte de la rainure grâce à l'interaction des saillies et des branches dans la région des évidements de ces dernières, la configuration des branches et l'effet de ladite interaction étant tel que, pour enlever la bande de garniture du rebord, il faut une force beaucoup plus considérable que celle qui est nécessaire pour engager la bande de garniture sur le rebord et enserrer celui-ci.

2. Bande de garniture selon la revendication 1, dans laquelle les saillies (26, 27, 56, 57, 85, 87) comportent chacune une face de poussée contre laquelle, quand, pendant l'utilisation, on essaye d'enlever la bande de garniture du rebord, une région d'extrémité libre agrandie (20, 21, 50, 51, 80, 81) vient buter de manière à pousser la région d'extrémité libre de la branche en la faisant venir en contact plus puissant avec le rebord.

3. Bande de garniture selon la revendication 1 ou 2, dans laquelle le rapport entre la longueur de chaque branche, mesurée le long de la face qui est orientée vers la face correspondante de l'autre branche, et la largeur de la rainure à l'endroit où la racine de chaque branche fait saillie de sa paroi latérale correspondante est supérieure à 1,1:1, de préférence supérieure à 1,2:1, mieux encore supérieure à 1,3:1, et même mieux encore supérieure à 1,4:1, et de façon idéale est égale à environ 1,5:1.

4. Bande de garniture selon l'une quelconque des revendications précédentes, dans lequel les branches sont formées, sur au moins les régions superficielles (60, 61, 90, 91) qui sont orientées vers la branche opposée, par au moins du poly(chlorure de vinyle) plastifié et poli;

l'agencement étant tel que, pendant l'utilisation, quand on essaye d'enlever la bande de garniture d'un rebord sur lequel elle a été engagée, les faces dirigées vers l'intérieur des branches agrippent le rebord sur une longueur considérable qui, conjointement avec la nature de ces faces formées de poly(chlorure de vinyle) plastifié et poli, créent un agrippement ferme sur le rebord, grâce à quoi pour enlever la bande de garniture du rebord il faut une force beaucoup plus grande que celle qui est nécessaire pour engager la bande de garniture sur le rebord.

5. Bande de garniture selon la revendication 4, dans laquelle pratiquement la totalité de chaque branche est formée de poly(chlorure de vinyle) plastifié et poli.

6. Bande de garniture selon l'une quelconque des revendications précédentes, qui comprend également un élément d'étanchéité en un endroit adjacent à l'extérieur d'une des parois latérales, et/ou qui comprend également un noyau (15,45,75) noyé à l'intérieur de la base et des parois latérales de la bande de garniture.

7. Bande de garniture selon l'une quelconque des revendications précédentes, dans laquelle la base et les deux parois latérales sont formées de poly(chlorure de vinyle), d'un mélange de nitrile et de poly(chlorure de vinyle) ou d'un caoutchouc styrène butadiène.

8. Bande de garniture selon l'une quelconque des revendications précédentes, dans laquelle la base et les deux parois latérales ont une dureté Shore d'environ 70 et les branches ont une dureté Shore d'environ 60.

9. Bande de garniture selon l'une quelconque des revendications précédentes, qui, quand on la monte sur un rebord d'une épaisseur de 2,5mm, et qu'on l'en enlève, présente un rapport supérieur à 10:1 en ce qui concerne le rapport entre la force nécessaire pour enlever la bande de garniture du rebord et la force nécessaire pour pousser la bande de garniture sur le rebord.

10. Bande de garniture selon l'une quelconque des revendications précédentes, dans laquelle chaque branche peut comporter dans sa région d'extrémité libre une tête agrandie dont la partie proximale qui vient buter, pendant l'utilisation, contre la saillie correspondante, se présente sous la forme de coin de retenue (84, 85) apte, pendant l'utilisation, quand on engage la bande de garniture sur un rebord, à une interaction avec la saillie respective pour résister à l'enlèvement de la bande de garniture du rebord.

**Ansprüche**

**1.** Streifengebilde (10, 40, 70) zum Festklemmen an einem Flansch o. dgl. Bauteil (70), mit einem durch einen Basisabschnitt (12, 42, 72) und zwei einander gegenüberliegenden Seitenwänden (13, 14, 43, 44, 73, 74) definierten Kanal, wobei jede Seitenwand ein integriertes langgestrecktes Bogenglied (16, 17, 45, 47, 75, 77) aufweist, das so nach innen und gegen den Basisabschnitt gerichtet ist, daß die Bogenglieder mit ihren freien Endbereichen aneinanderliegen; wobei diejenige Fläche jedes Bogengliedes, welche der korrespondierenden Fläche des anderen Bogengliedes zugewandt ist, über einen Teil des Bogengliedes im Bereich des freien Endes gerade oder im wesentlichen gerade ist; wobei die Seitenwände ebenfalls einen inneren Vorsprung (26, 27, 56, 57, 86, 87) aufweisen, der dem Basisabschnitt des Kanals näher liegt als die Wurzel des Bogengliedes; wobei jedes der Bogenglieder auf der der Seitenwand zugewandten Fläche eine Vertiefung (22, 23, 52, 53, 82, 83) aufweist, in die der Vorsprung aufgenommen werden kann; wobei jedes Bogenglied eine Länge besitzt, welche entlang der der korrespondierenden Fläche des anderen Bogengliedes Zugewandten Fläche gemessen, die Breite des Kanals an dem Punkt überschreitet, an dem die Wurzel des Bogengliedes von seiner jeweiligen Seitenwand vorsteht, wobei die Anordnung derart ist, daß, wenn das Streifengebilde bei Gebrauch, an einem Flansch o. dgl. Bauteil festgeklemmt wird, der Flansch die Bogenglieder auseinanderbewegt wobei die Vorsprünge in die korrespondierenden Vertiefungen aufgenommen werden, wodurch das Festklemmen ohne übermäßige Kraft durchführbar ist, aber, bei einem Versuch des Entfernens des Streifengebildes von dem Flansch, die freien Endbereiche der Bogenglieder an dem Flansch angreifen und die Bogenglieder durch das Zusammenwirken der Vorsprünge und der Bogenglieder im Bereich ihrer Vertiefungen die Bogenglieder an einer unzulässigen Bewegung in Richtung des offenen Endes des Kanals gehindert werden, wobei die Gestaltung der Bogenglieder und die Folge des Zusammenwirkens so sind, daß zum Abnehmen des Streifengebildes von dem Flansch erheblich mehr Kraft erforderlich ist als zum Festklemmen des Streifengebildes an dem Flansch.

**2.** Streifengebilde nach Anspruch 1, wobei die Vorsprünge (26, 27, 56, ,57, 86, 87) eine nockenförmige Fläche aufweisen, gegen welche, wenn bei Gebrauch ein Versuch gemacht wird, das Streifengebilde von dem Flansch zu entfernen, ein vergrößerter freier Endbereich (20, 21, 50, 51, 80, 81) des Bogengliedes in einer Art und Weise anliegt, daß der freie Endbereich des Bogengliedes in strammerer Berührung mit dem Flansch gedrückt wird.

**3.** Streifengebilde nach Anspruch 1 oder 2, wobei das Verhältnis der Länge jedes Bogengliedes, gemessen entlang der Fläche, die der korrespondierenden Fläche des anderen Verlängerungsgliedes zugewandt ist, zur Breite des Kanals an dem Punkt, an dem die Wurzel jedes Bogengliedes von seiner jeweiligen Seitenwand hervorragt, 1,1 : 1 überschreitet, vorzugsweise 1 ,2 : 1 überschreitet, bevorzugter 1,3 : 1 überschreitet, noch bevorzugter 1,4 : 1 überschreitet und am bevorzugtesten ungefähr 1,5 : 1 ist.

**4.** Streifengebilde nach einem der vorhergehenden Ansprüche, wobei die Bogenglieder mindestens in den Oberflächenbereichen (60, 61, 90, 91), die dem gegenüberliegenden Bogenglied Zugewandt sind, aus einem polierten, plastifizierten Polyvinylchlorid-Material gebildet sind; und die Anordnung derart ist, daß, wenn bei Gebrauch ein Versuch gemacht wird, das Streifengebilde von einem Flansch, auf dem es festgeklemmt ist, zu entfernen, die nach innen gerichteten Flächen der Bogenglieder den Flansch auf einer beträchtlichen Länge angreifen, was in Verbindung mit den polierten, plastifizierten, Polyvinylchlorid-Eigenschaften dieser Flächen einen festen Angriff an dem Flansch bewirkt, wobei zur Entfernung des Streifengebildes von dem Flansch erheblich mehr Kraft notwendig ist als zum Festklemmen des Streifengebildes auf dem Flansch.

**5.** Streifengebilde nach Anspruch 4, wobei im wesentlichen die Gesamtheit jedes Bogengliedes aus einem polierten, plastifizierten Polyvinylchlorid-Material gebildet ist.

**6.** Streifengebilde nach einem der vorhergehenden Ansprüche, welches außerdem angrenzend an das Äußere einer der Seitenwände ein Abdichtungselement und/oder einen Kern (15, 45, 75) aufweist, welcher in dem Basisabschnitt und den Seitenwänden des Streifengebildes eingebettet ist.

**7.** Streifengebilde nach einem der vorhergehenden Ansprüche wobei der Basisabschnitt und die beiden Seitenwände aus Polyvinylchlorid, einer Nitril-Polyvinylchlorid-Mischung oder einem Styrol-Butadien-Kautschuk gebildet sind.

**8.** Streifengebilde nach einem der vorhergehenden Ansprüche, wobei der Basisabschnitt und die beiden Seitenwände eine Shore-Härte von ungefähr 70 und die Bogenglieder eine Shore-Härte von ungefähr 60 aufweisen.

9. Streifengebilde nach einem der vorhergehenden Ansprüche, welche, wenn angebracht an und entfernt von einem Flansch mit einer Dikke von 2,5 mm, ein Verhältnis größer als 10 : 1 besitzt im Vergleich zum Verhältnis der für das Entfernen der Streifengebilde von dem Flansch benötigten Kraft zu der Kraft, welche benötigt wird, das Streifengebilde auf den Flansch zu drücken.

10. Streifengebilde nach einem der vorhergehenden Ansprüche, dadurch gekennzeichnet, daß jedes Bogenglied an seinem freien Endbereich einen vergrößerten Kopf hat, dessen dem Anheftepunkt am nächsten gelegene, bei Gebrauch an den korrespondierenden Vorsprung stoßende Teil, als Drehkeil (84, 85) geformt ist, der, wenn bei Gebrauch das Streifengebilde auf einem Flansch festgeklemmt wird, in der Lage ist, mit dem jeweiligen Vorsprung zusammenzuwirken, um einem Entfernen des Streifengebildes von dem Flansch zu widerstehen.

*FIG. I.*

*FIG. 2.*

FIG. 3.

FIG. 4.